# EUROPÄISCHE PATENTSCHRIFT

(11) **EP 1 888 389 B1**
(45) Veröffentlichungstag und Bekanntmachung des Hinweises auf die Patenterteilung: **31.03.2010**
(21) Anmeldenummer: 06761932.0
(22) Anmeldetag: 24.05.2006
(51) Int. Cl.: B60T 17/18, B60T 13/26

(54) **PARKBREMSEINRICHTUNG EINES FAHRZEUGS MIT ELEKTRO-PNEUMATISCHER NOTLÖSEEINRICHTUNG**
PARKING BRAKE MECHANISM OF A VEHICLE COMPRISING AN ELECTRO-PNEUMATIC EMERGENCY RELEASE MECHANISM
DISPOSITIF DE FREINAGE DE STATIONNEMENT D'UN VEHICULE A DISPOSITIF DE DECLENCHEMENT D'URGENCE ELECTROPNEUMATIQUE

(30) Priorität: 25.05.2005 DE 102005024120
(43) Veröffentlichungstag der Anmeldung: 20.02.2008
(73) Patentinhaber: KNORR-BREMSE Systeme für Nutzfahrzeuge GmbH, 80809 München (DE)
(72) Erfinder: HERGES, Michael, 80935 München (DE); FONSECA, Braulio, 85391 Allershausen (DE)
(74) Vertreter: Schönmann, Kurt
(86) Internationale Anmeldenummer: PCT/EP2006/004923
(87) Internationale Veröffentlichungsnummer: WO 2006/125615

(56) Entgegenhaltungen:
- EP-A- 0 171 281
- WO-A-2005/025958

## Beschreibung

### Stand der Technik

Die Erfindung betrifft eine Parkbremseinrichtung eines Nutzfahrzeugs, beinhaltend wenigstens einen Federspeicherbremszylinder sowie einen ersten Parkbremskreis mit einem Vorratsdruckbehälter und einer ersten Steuerventileinrichtung, welche den wenigstens einen Federspeicherbremszylinder be- oder entlüftet, gemäß dem Oberbegriff von Anspruch 1.

Aus dem Stand der Technik sind rein pneumatische Parkbremseinrichtungen bekannt, welche vornehmlich bei Nutzfahrzeugen über 6,5 Tonnen Anwendung finden. Dabei enthält die Parkbremse einen oder mehrere Federspeicherbremszylinder, die zum Lösen belüftet und zum Zuspannen entlüftet werden. Bekannte pneumatische Parkbremseinrichtungen weisen im Fahrerhaus ein Handbremsventil auf, welches abhängig von seiner Betätigung durch den Fahrer in einem Bremskreis einen Steuerdruck für ein Relaisventil erzeugt, um entweder den Vorratsdruck an die Federspeicherbremszylinder weiterzuschalten oder um die Federspeicherzylinder zu entlüften.

Eine Luftaufbereitungsanlage zum Versorgen einer Nutzkraftfahrzeugbremsanlage mit Druckluft, mit einem zur Versorgung einer Feststellbremsanlage vorgesehenen Druckluftausgang, der zur Belüftung mindestens eines Federspeicherzylinders einer Feststellbremse und damit zum Lösen der Feststellbremse vorgesehen ist, ist aus WO 2005/025958 A bekannt.

Bei solcherart Parkbremseinrichtungen kann es vorkommen, dass durch einen Ausfall der Druckluftversorgung, beispielsweise durch ein Leck in einer Druckleitung oder im Vorratsdruckbehälter die Federspeicherbremszylinder zuspannen und das Nutzfahrzeug ungewollt in gebremster Stellung halten oder es in eine solche bringen. Um ein Abschleppen des Fahrzeugs zu ermöglichen bzw. um eine selbstständige Weiterfahrt zu ermöglichen, ist eine sog. Notlöseeinrichtung notwendig, welche die Federspeicherzylinder belüftet. Diese Notlöseeinrichtung besteht bei bekannten pneumatischen Parkbremseinrichtungen

in einem zusätzlichen Bremskreis mit eigenem Druckluftvorrat, welcher über das Handbremsventil betätigt wird. Dazu ist allerdings eine zusätzliche pneumatische Verrohrung vom Fahrerhaus bis zu den Federspeicherbremszylindern notwendig, wobei gerade bei Kippfahrerhäusem, wie sie bei schweren Nutzfahrzeugen üblich sind, eine solche Realisierung äußerst aufwendig ist.

Vor diesem Hintergrund besteht die Aufgabe der Erfindung darin, eine Parkbremseinrichtung der eingangs erwähnten Art derart weiter zu entwickeln, bei welcher die Notlösefunktion auf einfache und kostengünstige Weise realisiert ist.

Diese Aufgabe wird durch die Merkmale von Anspruch 1 gelöst.

### Vorteile der Erfindung

Die Erfindung basiert auf dem Gedanken, eine kostengünstige Notlöseeinrichtung dadurch zu verwirklichen, indem ein weiterer elektro-pneumatischer Parkbremskreis mit einem weiteren separaten Vorratsdruckbehälter und einer wenigstens ein Magnetventil beinhaltenden weiteren Steuerventileinrichtung vorgesehen wird, wobei zumindest die weitere Steuerventileinrichtung in unmittelbarer Nähe des wenigstens einen Federspeicherbremszylinders angeordnet ist. Anstatt mehrerer pneumatischer Rohrleitungen sind nun lediglich elektrische Leitungen vom Fahrerhaus zu der achsnah angeordneten weiteren Steuerventileinrichtung zu führen, was vor allem im Hinblick auf Kippfahrerhäuser von Vorteil ist. Die pneumatische Verrohrung beschränkt sich indes auf den pneumatischen Teil des elektro-pneumatischen Parkbremskreises, welcher achsnah angeordnet und die pneumatischen Verbindungen somit sehr kurz ausgeführt werden können. Dies führt zu einer erheblichen Kostenersparnis gegenüber dem Stand der Technik.

Durch die in den Unteransprüchen aufgeführten Maßnahmen sind vorteilhafte Weiterbildungen und Verbesserungen der in Anspruch 1 angegebenen Erfindung möglich.

Besonders bevorzugt ist ein Wechselventil vorhanden, welches den größeren der an einem Druckausgang des ersten Parkbremskreises und an einem Druckausgang des weiteren elektro-pneumatischen Parkbremskreises herrschenden Drücke auf den wenigstens einen Federspeicherbremszylinder schaltet.

Gemäß einer weiteren bevorzugten Maßnahme kann der weitere elektro-pneumatische Parkbremskreis zum Entlüften des Federspeicherbremszylinders ausgebildet sein. Dann kann der weitere Parkbremskreis neben der Notlösefunktion auch die Parkbremse zuspannen. Dies ist insbesondere dann von Vorteil, wenn das Nutzfahrzeug trotz defektem ersten Parkbremskreis nach dem Notlösen der Federspeicherbremsen wieder aus eigener Kraft betrieben werden und ein erneutes Abstellen mit zugespannter Federspeicherbremse möglich sein soll.

Beispielsweise enthält die weitere Steuerventileinrichtung ein 3/2-Wegemagnetventil, welches den Vorratsdruck des weiteren Vorratsdruckbehälters auf den Federspeicherbremszylinder schaltet oder diesen mit einer Entlüftung verbindet. Außerdem kann die weitere Steuerventileinrichtung ein dem 3/2-Wegemagnetventil nachgeordnetes 2/2-Wegemagnetventil beinhalten, durch welches eine Verbindung zum Federspeicherbremszylinder durchschalt- oder sperrbar ist. Durch Hin- und Herschalten des weiteren 2/2-Wegemagnetventils ist der wenigstens eine Federspeicherbremszylinder stufenweise be- und entlüftbar. Dann kann die Parkbremse stufenweise gelöst und zugespannt werden, wodurch der weitere Parkbremskreis die volle Funktionalität des ersten Parkbremskreises erlangt.

Besonders bevorzugt sind wenigstens die weitere Steuerventileinrichtung und ein sie steuerndes elektronisches Steuergerät in einem Modul zusammengefasst, welches in unmittelbarer Nähe des wenigstens einen Federspeicherbremszylinders angeordnet ist. Durch diesen Aufbau wird ein standardisiertes Modul verwirklicht, das für verschiedene Typen von Nutzfahrzeugen universell einsetzbar ist.

Wenn auch der erste Parkbremskreis ein elektro-pneumatischer Parkbremskreis ist und die erste Steuerventileinrichtung wenigstens ein Magnetventil beinhaltet, welches durch das elektronische Steuergerät angesteuert wird, kann auch die erste Steuerventileinrichtung in den Modul integriert werden. Dies bedingt einen noch kompakteren Aufbau und noch kürzere pneumatische Verrohrungen.

Für den Fall, dass der erste Parkbremskreis ein elektro-pneumatischer Parkbremskreis ist und die erste Steuerventileinrichtung wenigstens ein Magnetventil beinhaltet, welches durch ein elektronisches Steuergerät angesteuert wird, kann dieses Steuergerät zugleich den weiteren elektro-pneumatischen Parkbremskreis ansteuern und zugleich entfernt von einem Modul angeordnet sein, in welchem die erste Steuerventileinrichtung und die weitere Steuerventileinrichtung integriert sind. Um die Auswirkungen eines Schadens an den elektrischen Steuerleitungen auf dem Weg vom Steuergerät zum Modul so gering wie möglich zu halten, weisen wenigstens einige der Magnetventile der weiteren Steuerventileinrichtung Doppelmagneten auf, welche durch redundant vorhandene elektrische Steuerleitungen ansteuerbar sind. Dann kann die Funktion eines ausgefallenen Magneten oder einer beschädigten Steuerleitung durch das redundante Bauteil ausgeführt werden.

### Die erste Steuerventileinrichtung des ersten elektro-pneumatischen

Parkbremskreises kann ein Relaisventil beinhalten, welches abhängig von einem von wenigstens einem Magnetventil erzeugtem Steuerdruck aus dem Vorratsdruck des ersten Vorratsdruckbehälters einen Betätigungsdruck für den Federspeicherbremszylinder moduliert oder ihn entlüftet. Dann können große Mengen an Druckluft mit einem verhältnismäßig geringen Volumen an Steuerdruckluft gesteuert werden, was eine vorteilhaft kleine Dimensionierung des Magnetventils erlaubt. Weiterhin kann das wenigstens eine Magnetventil ein 3/2-Wegemagnetventil sein, welches den Vorratsdruck des ersten Vorratsdruckbehälters auf einen Steuereingang des Relaisventils schaltet oder diesen mit einer Entlüftung verbindet. Nicht zuletzt kann dem 3/2-Wegeventil und dem Relaisventil ein 2/2-Wegeventil zwischengeschaltet werden, durch welches ein stufbarer Steuerdruck für das Relaisventil erzeugbar ist, um eine stufbare Betätigung der Parkbremse zu ermöglichen.

### Zeichnungen

Ein Ausführungsbeispiel der Erfindung ist in der Zeichnung dargestellt und in der nachfolgenden Beschreibung näher erläutert. In der Zeichnung zeigt
- Fig.1: eine schematische Darstellung einer Parkbremseinrichtung gemäß einer bevorzugten Ausführungsform der Erfindung;
- Fig.2: eine schematische Darstellung einer Parkbremseinrichtung gemäß einer weiteren Ausführungsform der Erfindung;
- Fig.3: eine schematische Darstellung einer Parkbremseinrichtung gemäß einer weiteren Ausführungsform der Erfindung.

### Beschreibung des Ausführungsbeispiels

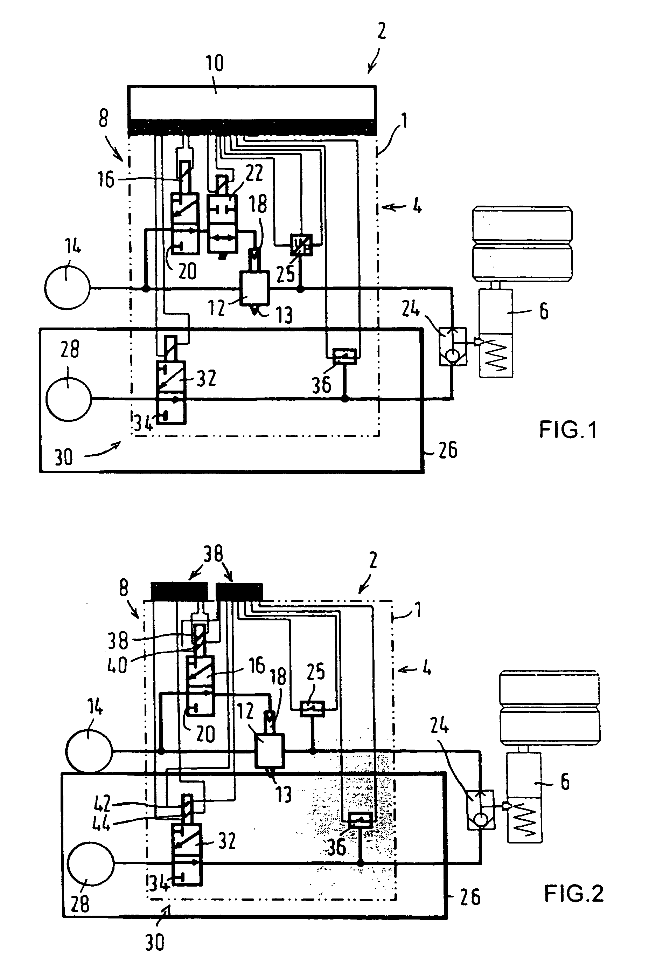

Das in Fig.1 gezeigte Schaltschema charakterisiert ein Modul 1, in welchem eine Parkbremseinrichtung 2 gemäß einer bevorzugten Ausführungsform enthalten ist. Die Parkbremseinrichtung 2 beinhaltet einen ersten, vorzugsweise elektro-pneumatischen Parkbremskreis 4 zur Betätigung einer Parkbremse, welche einen oder mehrere Federspeicherbremszylinder betätigt, die wenigstens einer Achse eines Nutzfahrzeugs zugeordnet sind. In den Figuren ist stellvertretend für mehrere Federspeicherbremszylinder leidlich ein Federspeicherbremszylinder 6 dargestellt. Anstatt elektro-pneumatisch könnte der erste Parkbremskreis 4 auch rein pneumatisch betätigt sein.

Für den Fall, dass der erste Parkbremskreis 4 ein elektro-pneumatischer Parkbremskreis ist, weist er eine wenigstens ein Magnetventil beinhaltende erste Steuerventileinrichtung 8 auf, welche durch ein vorzugsweise in dem Modul 1 integriertes elektronisches Steuergerät 10 angesteuert wird. Besonders bevorzugt beinhaltet die erste Steuerventileinrichtung 8 ein Relaisventil 12, welches abhängig von einem von wenigstens einem Magnetventil erzeugtem Steuerdruck aus dem Vorratsdruck eines ersten Vorratsdruckbehälters 14 einen Betätigungsdruck für den Federspeicherbremszylinder 6 moduliert oder ihn über eine Entlüftung 13 entlüftet. Dieses Magnetventil kann beispielsweise ein von dem elektronischen Steuergerät 10 angesteuertes 3/2-Wegemagnetventil 16 sein, welches den Vorratsdruck des ersten Vorratsdruckbehälters 14 auf einen Steuereingang 18 des Relaisventils 12 schaltet oder diesen mit einer Entlüftung 20 verbindet. Nicht zuletzt kann dem 3/2-Wegeventil 16 und dem Relaisventil 12 ein 2/2 Wegeventil 22 zwischengeschaltet sein, welches zwischen einer Durchschaltstellung und einer Sperrstellung hin- und hergeschaltet werden kann. Dieses 2/2-Wegemagnetventil 22 kann durch das Steuergerät 10 getaktet angesteuert werden, wodurch ein stufbarer Steuerdruck für das Relaisventil 12 erzeugbar ist, um eine stufbare Betätigung des Federspeicherbremszylinders 6 durch den ersten elektro-pneumatischen Parkbremskreis 1 zu ermöglichen. Weiterhin steht ein Anschluss des 2/2-Wegemagnetventils mit einem ersten Eingang eines Wechselventils 24 in druckleitender Verbindung, auf welches später noch eingegangen wird. Nicht zuletzt weist der erste elektro-pneumatische Parkbremskreis 4 druckausgangsseitig des Relaisventils 12 einen Drucksensor 25 auf, zur Messung des von ihm ausgesteuerten Drucks, welcher, falls er durch das Wechselventil 24 weitergeschaltet wird, dann in den Federspeicherbremszylinder 6 eingesteuert wird, um die Parkbremse zu lösen. Vorzugsweise ist jedem einzelnen der von der weiteren Steuerventileinrichtung 30 angesteuerten Federspeicherbremszylinder 6 ein eigenes Wechselventil 24 vorgeschaltet.

Außer dem ersten elektro-pneumatischen Parkbremskreis 4 beinhaltet die Parkbremseinrichtung 2 einen weiteren Parkbremskreis 26 für den Fall, dass der erste Parkbremskreis 4 ausfällt und der Federspeicherbremszylinder 6 gelöst werden muss. Dieser weitere Parkbremskreis 26 ist ein elektro-pneumatischer Parkbremskreis und in den Figuren zur Kennzeichnung jeweils von einem Kästchen umgeben. Dieser weitere Parkbremskreis 26 verfügt über einen weiteren, separaten Vorratsdruckbehälter 28 und einer wenigstens ein Magnetventil beinhaltenden weiteren Steuerventileinrichtung 30 wenigstens zum Belüften des Federspeicherbremszylinders 6 im Notlösefall. Beispielsweise enthält die weitere Steuerventileinrichtung 30 ein weiteres 3/2-Wegemagnetventil 32, welches den Vorratsdruck des weiteren Vorratsdruckbehälters 28 auf einen zweiten Eingang des Wechselventils 24 schaltet oder diesen zweiten Eingang mit einer Entlüftung 34 verbindet. Weiterhin meldet ein weiterer Drucksensor 36 den vor dem Wechselventil 24 herrschenden Druck im weiteren elektro-pneumatischen Parkbremskreis 26 an das Steuergerät 10. Das Wechselventil 24 schaltet dann den größeren der an seinen Eingängen herrschenden Drücke auf den Federspeicherbremszylinder 6 durch.

Alternativ kann ein Über- oder Unterschreiten mindestens einer Druckschwelle am Ausgang der weiteren Steuerventileinrichtung 30 mit mindestens einem Druckschalter detektiert werden.

Vorzugsweise das gesamte Modul 1, beinhaltend die erste Steuerventileinrichtung 8 des ersten Parkbremskreises 4, die weitere Steuerventileinrichtung 30 des weiteren Parkbremskreises 26 sowie das Steuergerät 10 sind in unmittelbarer Nähe des Federspeicherbremszylinders 6 angeordnet, beispielsweise an einer Achse mit Rädern, welche durch den wenigstens einen weiteren Federspeicherbremszylinder symbolisierenden Federspeicherbremszylinder 6 eingebremst werden. Dies gilt vorzugsweise auch für die beiden Vorratsdruckbehälter 14, 28. Die Baugruppen des Moduls 1 sind beispielsweise in einem gemeinsamen Gehäuse untergebracht. Betätigt wird der erste Parkbremskreis 4 und der weitere Parkbremskreis 26 durch eine aus Maßstabsgründen nicht gezeigte, in einem Fahrerhaus des Nutzfahrzeugs angeordnete elektrische Betätigungseinrichtung, wobei diese Betätigungseinrichtung derart ausgeführt ist, dass die beiden Parkbremskreise 4, 26 getrennt voneinander betätigbar sind, beispielsweise durch zwei getrennte Kanäle.

### Vor diesem Hintergrund ist die Funktion der Parkbremseinrichtung 2 wie folgt :

Zum Lösen des Federspeicherbremszylinders 6 bei intaktem erstem elektropneumatischem Parkbremskreis 4 werden abhängig von einer Aktivierung des diesem Parkbremskreis 4 zugeordneten Kanals der Betätigungseinrichtung das 3/2-Wegemagnetventil 16 sowie das 2/2-Wegemagnetvenfil 22 so geschaltet, dass eine durchgehende druckleitende Verbindung zwischen dem ersten Vorratsdruckbehälter 14 und dem Steuereingang 18 des Relaisventils 12 zur Einsteuerung eines Steuerdrucks hergestellt wird, welches daraufhin einen vom Vorratsdruck im ersten Vorratsdruckbehälter 14 abgeleiteten Druck in den ersten Eingang des Wechselventils 24 einsteuert. Da der Kanal des weiteren Parkbremskreises 26 nicht aktiviert ist, befindet sich das weitere 3/2-Wegeventil 32 in Entlüftungsstellung, wodurch der Druck am zweiten Eingang des Wechselventils 24 kleiner als der Druck am ersten Eingang ist, weshalb Letzterer zum Federspeicherbremszylinder 6 durchgesteuert wird.

Bei einem Defekt im ersten Parkbremskreis 4, beispielsweise aufgrund eines Lecks in einer Druckleitung, detektiert der zugeordnete Drucksensor 25, dass trotz einer Signalanforderung zum Bremslösen kein Druckaufbau am Relaisventil 12 stattfindet. Dann wird entweder automatisch oder durch den Fahrer auf ein entsprechendes Signal im Fahrerhaus hin der weitere Parkbremskreis 26 zum Notlösen aktiviert und das weitere 3/2-Wegeventil 32 so geschaltet, dass eine Strömungsverbindung zwischen dem weiteren Vorratsdruckbehälter 28 und dem zweiten Eingang des Wechselventils 24 hergestellt wird, welches nun diesen Druck als größeren Druck zum Federspeicherbremszylinder 6 durchsteuert, um die Parkbremse zu lösen. Demgegenüber kann bei defektem ersten Parkbremskreis 4 die Parkbremse mit dem weiteren Parkbremskreis 26 auch zuspannt werden, indem das weitere 3/2-Wegeventil 32 in seine Entlüftungsstellung geschaltet wird, so dass mit Ausnahme der Relaisfunktion sämtliche Funktionalitäten des ersten Parkbremskreises 4 durchführbar sind.

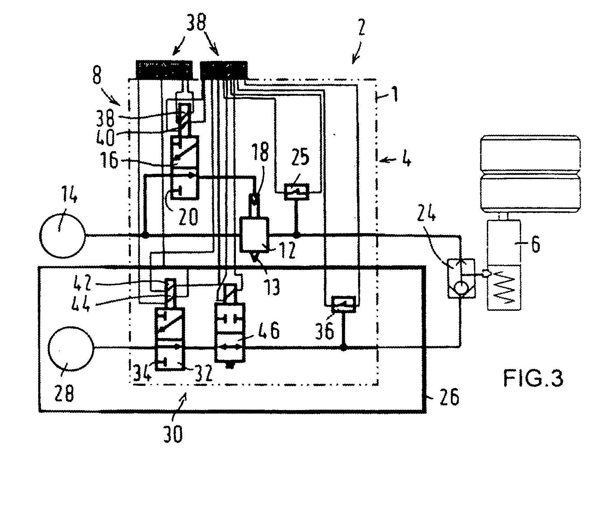

Bei den weiteren Ausführungsbeispielen der Erfindung nach Fig.2 und Fig.3 sind die gegenüber dem vorhergehenden Beispiel gleich bleibenden und gleich wirkenden Teile durch die gleichen Bezugszeichen gekennzeichnet. Im Unterschied zur Ausführungsform von Fig.1 ist bei der Parkbremseinrichtung 2 gemäß Fig.2 und Fig.3 das Steuergerät 10 nicht in das Modul 1 integriert, sondern entfernt von diesem angeordnet, beispielsweise im Fahrerhaus. Dann ist eine Steckverbindung 38 an dem Gehäuse des Moduls 1 vorgesehen, um eine elektrische Signalverbindung, beispielsweise über einen Datenbus zum Steuergerät herzustellen. Um die Auswirkungen eines Schadens an dem Datenbus auf dem Weg vom Steuergerät zum Modul 1 so gering wie möglich zu halten, ist der Datenbus redundant ausgeführt und vorzugsweise die Magnetventile 16, 32 weisen Doppelmagneten 38, 40 und 42, 44 auf, welche durch redundant vorhandene elektrische Steuerleitungen ansteuerbar sind. Dann kann die Funktion eines ausgefallenen Magneten oder eines Datenbusses durch das redundante Bauteil ausgeführt werden. Im Gegensatz zur Ausführungsform von Fig.1 ist im ersten Parkbremskreis 4 auch kein 2/2-Wegeventil vorhanden, wodurch der Aufbau zwar einfacher, aber kein gestuftes Lösen und Zuspannen der Parkbremse möglich ist.

Das Ausführungsbeispiel von Fig.3 unterscheidet sich von dem von Fig.2 darin, dass der weitere Parkbremskreis 26 ein dem 3/2-Wegeventil 32 nachgeschaltetes 2/2-Wegeventil 46 aufweist, durch welche die Parkbremse stufenweise notgelöst und zugespannt werden kann.

### Bezugszahlenliste

- 1: Modul
- 2: Parkbremseinrichtung
- 4: erster Parkbremskreis
- 6: Federspeicherbremszylinder
- 8: erste Steuerventileinrichtung
- 10: Steuergerät
- 12: Relaisventil
- 13: Entlüftung
- 14: erster Vorratsdruckbehälter
- 16: 3/2-Wegeventil
- 18: Steuereingang
- 20: Entlüftung
- 22: 2/2-Wegeventil
- 24: Wechselventil
- 25: Drucksensor
- 26: weiterer Parkbremskreis
- 28: weiterer Vorratsdruckbehälter
- 30: weitere Steuerventileinrichtung
- 32: weiteres 3/2-Wegeventil
- 34: Entlüftung
- 36: weiterer Drucksensor
- 38: Doppelmagnet
- 40: Doppelmagnet
- 42: Doppelmagnet
- 44: Doppelmagnet
- 46: 2/2-Wegeventil

## Patentansprüche

1. Parkbremseinrichtung (2) eines Nutzfahrzeugs, beinhaltend wenigstens einen Federspeicherbremszylinder (6) sowie einen ersten Parkbremskreis (4) mit einem Vorratsdruckbehälter (14) und einer ersten Steuerventileinrichtung (8), welche den wenigstens einen Federspeicherbremszylinder (6) be- oder entlüftet, **dadurch gekennzeichnet, dass** für den Fall, dass der erste Parkbremskreis (4) ausfällt, ein weiterer elektro-pneumatischer Parkbremskreis (26) mit einem weiteren, separaten Vorratsdruckbehälter (28) und einer wenigstens ein Magnetventil (32; 46) beinhaltenden weiteren Steuerventileinrichtung (30) wenigstens zum Belüften des Federspeicherbremszylinders (6) im Notlösefall vorgesehen ist, wobei zumindest die weitere Steuerventileinrichtung (30) in unmittelbarer Nähe des wenigstens einen Federspeicherbremszylinders (6) angeordnet ist.

2. Parkbremseinrichtung nach Anspruch 1, **dadurch gekennzeichnet, dass** ein Wechselventil (24) vorhanden sind, welches den größeren der an einem Druckausgang des ersten Parkbremskreises (4) und an einem Druckausgang des weiteren elektro-pneumatischen Parkbremskreises (26) herrschenden Drücke auf den wenigstens einen Federspeicherbremszylinder (6) schaltet.

3. Parkbremseinrichtung nach Anspruch 2, **dadurch gekennzeichnet, dass** jedem einzelnen der von der weiteren Steuerventileinrichtung (30) angesteuerten Federspeicherbremszylinder (6) ein eigenes Wechselventil (24) vorgeschaltet ist.

4. Parkbremseinrichtung nach wenigstens einem der vorhergehenden Ansprüche, **dadurch gekennzeichnet, dass** der weitere elektro-pneumatischer Parkbremskreis (26) weiterhin zum Entlüften des Federspeicherbremszylinders (6) ausgebildet ist.

5. Parkbremseinrichtung nach Anspruch 4, **dadurch gekennzeichnet, dass** die weitere Steuerventileinrichtung (30) ein 3/2-Wegemagnetventil (32) enthält, welches den Vorratsdruck des weiteren Vorratsdruckbehälters (28) auf den Federspeicherbremszylinder (6) schaltet oder diesen mit einer Entlüftung (34) verbindet.

6. Parkbremseinrichtung nach Anspruch 5, **dadurch gekennzeichnet, dass** die weitere Steuerventileinrichtung (30) ein dem 3/2-Wegemagnetventil (32) nachgeordnetes 2/2-Wegemagnetventil (46) beinhaltet, durch welches eine Verbindung zum Federspeicherbremszylinder (6) durchschalt- oder sperrbar ist.

7. Parkbremseinrichtung nach wenigstens einem der vorhergehenden Ansprüche, **dadurch gekennzeichnet, dass** wenigstens die weitere Steuerventileinrichtung (30) und ein sie steuerndes elektronisches Steuergerät (10) in einem Modul (1) zusammengefasst sind, welches in unmittelbarer Nähe des wenigstens einen Federspeicherbremszylinders (6) angeordnet ist.

8. Parkbremseinrichtung nach Anspruch 7, **dadurch gekennzeichnet, dass** der erste Parkbremskreis (4) ein elektro-pneumatischer Parkbremskreis ist und die erste Steuerventileinrichtung (8) wenigstens ein Magnetventil (16, 22) beinhaltet, welches durch das elektronische Steuergerät (10) angesteuert wird, wobei die erste Steuerventileinrichtung (8) in dem Modul (1) integriert ist.

9. Parkbremseinrichtung nach wenigstens einem der Ansprüche 1 bis 5, **dadurch gekennzeichnet, dass** der erste Parkbremskreis (4) ein elektro-pneumatischer Parkbremskreis ist und die erste Steuerventileinrichtung (8) wenigstens ein Magnetventil (16) beinhaltet, welches durch ein elektronisches Steuergerät angesteuert wird, das zugleich den weiteren elektro-pneumatischen Parkbremskreis (26) steuert und welches entfernt von einem Modul (1) angeordnet ist, in welchem die erste Steuerventileinrichtung (8) und die weitere Steuerventileinrichtung (30) integriert sind, von welcher wenigstens einige Magnetventile (16, 32) Doppelmagneten (38, 40 und 42, 44) aufweisen, welche durch redundant vorhandene elektrische Steuerleitungen ansteuerbar sind.

10. Parkbremseinrichtung nach Anspruch 8 oder 9, **dadurch gekennzeichnet, dass** die erste Steuerventileinrichtung (8) des ersten elektro-pneumatischen Parkbremskreises (4) ein Relaisventil (12) beinhaltet, welches abhängig von einem von wenigstens einem Magnetventil (16, 22) erzeugten Steuerdruck aus dem Vorratsdruck des ersten Vorratsdruckbehälters (14) einen Betätigungsdruck für den Federspeicherbremszylinder (6) moduliert oder ihn entlüftet.

11. Parkbremseinrichtung nach Anspruch 10, **dadurch gekennzeichnet, dass** das wenigstens eine Magnetventil ein 3/2-Wegeventil (16) enthält, welches den Vorratsdruck des ersten Vorratsdruckbehälters (14) auf einen Steuereingang (18) des Relaisventils (12) schaltet oder diesen mit einer Entlüftung (20) verbindet.

12. Parkbremseinrichtung nach Anspruch 11, **dadurch gekennzeichnet, dass** dem 3/2-Wegeventil (16) und dem Relaisventil (12) ein 2/2-Wegeventil (22) zwischengeschaltet ist, durch welches ein stufbarer Steuerdruck erzeugbar ist.

13. Parkbremseinrichtung nach wenigstens einem der vorhergehenden Ansprüche, **dadurch gekennzeichnet, dass** am Druckausgang der ersten Steuerventileinrichtung (8) und/oder am Druckausgang der weiteren Steuerventileinrichtung (30) anliegende Druck mit wenigstens einem Drucksensor (25, 36) gemessen wird.

14. Parkbremseinrichtung nach wenigstens einem der vorhergehenden Ansprüche, **dadurch gekennzeichnet, dass** ein Über- oder Unterschreiten mindestens einer Druckschwelle am Druckausgang der weiteren Steuerventileinrichtung (30) mit mindestens einem Druckschalter detektiert wird.

## Claims

1. Parking brake assembly (2) of a commercial vehicle, comprising at least one for a commercial vehicle, comprising at least one spring-loaded brake cylinder (6) as well as a first parking brake circuit (4) including a supply pressure reservoir (14) and a first control valve means (8) that ventilates or de-aerates said at least one spring-loaded brake cylinder (6), **characterized in that** in the event of failure of said first parking brake circuit (4), a further electro-pneumatic parking brake circuit (26) is provided with a further separate supply pressure reservoir (28) and a further control valve means (26) including at least one solenoid-operated valve (32; 46) at least for de-aeration of said spring-loaded brake cylinder (6) in the event of emergency release, with at least said further control valve means (30) being disposed in the immediate vicinity of said at least one spring-loaded brake cylinder (6).

2. Parking brake assembly according to Claim 1, **characterized in that** a shuttle valve (24) is provided which communicates the higher one of the pressures prevailing at one pressure output of said first parking brake circuit (4) and at one pressure output of said further electro-pneumatic parking brake circuit (26) to said at least one spring-loaded brake cylinder (6).

3. Parking brake assembly according to Claim 2, **characterized in that** a separate shuttle valve (24) is connected upstream of each of said spring-loaded brake cylinders (6) controlled by said further control valve means (30).

4. Parking brake assembly according to at least one of the preceding Claims, **characterized in that** said further electro-pneumatic parking brake circuit (26) is moreover configured for de-aeration of said spring-loaded brake cylinder (6).

5. Parking brake assembly according to Claim 4, **characterized in that** said further control valve means (30) includes a 3/2-way solenoid-operated valve (32) that communicates the supply pressure of said further supply pressure reservoir (28) to said spring-loaded brake cylinder (6) or communicates the latter to a de-aeration means (34).

6. Parking brake assembly according to Claim 5, **characterized in that** said further control valve means (30) includes a 2/2-way solenoid-operated valve (46) disposed downstream of said 3/2-way solenoid-operated valve (32), via which a communication with said spring-loaded brake cylinder (6) can be established or blocked.

7. Parking brake assembly according to at least one of the preceding Claims, **characterized in that** at least said further control valve means (30) and an electronic controller (10) controlling same are combined in a single module (1) that is disposed in the immediate vicinity of said at least one spring-loaded brake cylinder (6).

8. Parking brake assembly according to Claim 7, **characterized in that** said first parking brake circuit (4) is an electro-pneumatic parking brake circuit and that said first control valve means (8) comprises at least one solenoid-operated valve (16, 22) that is controlled by said electronic controller (10), with said first control valve means (8) being integrated into said module (1).

9. Parking brake assembly according to at least one of the Claims 1 to 5, **characterized in that** said first parking brake circuit (4) is an electro-pneumatic parking brake circuit and that said first control valve means (8) includes at least one solenoid-operated valve (16) that is controlled by an electronic controller controlling, at the same time, said further electro-pneumatic parking brake circuit (26), which controller is disposed remotely from a module (1) in which said first control valve means (8) and said further control valve means (30) are integrated, in which at least some solenoid-operated valves (16, 32) include dual solenoids (38, 40 and 42, 44) adapted to be controlled by electrical control lines provided in a redundant number.

10. Parking brake assembly according to Claim 8 or 9, **characterized in that** said first control valve means (8) of said first electro-pneumatic parking brake circuit (4) includes a relay valve (12) that modulates or de-aerates an operating pressure level for said spring-loaded brake cylinder (6) as a function of a control pressure generated by at least one solenoid-operated valve (16, 22) from the supply pressure level of said first supply pressure reservoir (14).

11. Parking brake assembly according to Claim 10, **characterized in that** said at least one solenoid-operated valve includes a 3/2-way valve (16) that communicates said supply pressure of said first supply pressure reservoir (14) to a control input (18) of said relay valve (12) or communicates said control input to a de-aeration means (20).

12. Parking brake assembly according to Claim 11, **characterized in that** a 2/2-way valve (22) is interposed between said 3/2-way valve (16) and said relay valve (12), by means of which a gradable control pressure can be generated.

13. Parking brake assembly according to at least one of the preceding Claims, **characterized in that** the pressure prevailing at the pressure output of said first control valve means (8) and/or at the pressure output of said further control valve means (30) is gauged by means of at least one pressure sensor (25, 36).

14. Parking brake assembly according to at least one of the preceding Claims, **characterized in that** a rise beyond or a drop below at least one pressure threshold at the pressure output of said further control valve means (30) is detected by means of at least one pressure switch.

## Revendications

1. Dispositif de freinage de stationnement (2) d'un véhicule utilitaire, comprenant au moins un cylindre de frein à accumulateur (6) ainsi qu'un premier circuit de freinage de stationnement (4) renfermant un réservoir sous pression (14) et un premier moyen de vanne-pilote (8) qui ventile ou désaère ledit au moins un cylindre de frein à accumulateur (6), **caractérisé en ce qu'**au cas de défaillance dudit premier circuit de freinage de stationnement (4), un circuit de freinage de stationnement électropneumatique (26) supplémentaire est monté, qui comprend un réservoir sous pression (28) séparé supplémentaire et un moyen de vanne-pilote supplémentaire (26) renfermant au moins une électrovanne (32; 46) au moins pour la purge de l'air dudit cylindre de frein à accumulateur (6) au cas du déclenchement du frein d'urgence, au moins audit moyen de vanne-pilote supplémentaire (30) étant disposé au voisinage immédiat dudit au moins un cylindre de frein à accumulateur (6).

2. Dispositif de freinage de stationnement selon la revendication 1, **caractérisé en ce qu'**un sélecteur de circuit (24) est disposé, qui commute la plus grande parmi les pressions régnant à une sortie de pression dudit premier circuit de freinage de stationnement (4) et à une sortie de pression dudit circuit de freinage de stationnement électropneumatique (26) supplémentaire vers ledit au moins un cylindre de frein à accumulateur (6).

3. Dispositif de freinage de stationnement selon la revendication 2, **caractérisé en ce qu'**un sélecteur de circuit (24) séparé est raccordé en amont de chacun desdits cylindres de frein à accumulateur (6) commandé par ledit moyen de vanne-pilote supplémentaire (30).

4. Dispositif de freinage de stationnement selon au moins une quelconque des revendications précédentes, **caractérisé en ce que** ledit circuit de freinage de stationnement électropneumatique (26) supplémentaire est, au plus, configuré pour la purge de l'air en dehors dudit cylindre de frein à accumulateur (6).

5. Dispositif de freinage de stationnement selon la revendication 4, **caractérisé en ce que** ledit moyen de vanne-pilote supplémentaire (30) comprend une électrovanne à 3/2 orifices (32), qui communique la pression d'alimentation dudit réservoir sous pression (28) supplémentaire vers ledit cylindre de frein à accumulateur (6) ou établit la communication du dernier avec un moyen de purge de l'air (34).

6. Dispositif de freinage de stationnement selon la revendication 5, **caractérisé en ce que** ledit moyen de vanne-pilote supplémentaire (30) renferme une électrovanne (46) à 2/2 orifices, disposée en aval de ladite électrovanne à 3/2 orifices (32), via laquelle se peut établir ou bloquer une communication avec ledit cylindre de frein à accumulateur (6).

7. Dispositif de freinage de stationnement selon au moins une quelconque des revendications précédentes, **caractérisé en ce qu'**au moins ledit moyen de vanne-pilote supplémentaire (30) et une unité de commande électronique (10) la commandant are combinées dans un seul module (1), qui est disposé au voisinage immédiat dudit au moins un cylindre de frein à accumulateur (6).

8. Dispositif de freinage de stationnement selon la revendication 7, **caractérisé en ce que** ledit premier circuit de freinage de stationnement (4) est un circuit de freinage de stationnement électropneumatique et **en ce que** ledit premier moyen de vanne-pilote (8) comprend au moins une électrovanne (16, 22) qui est commandée par ladite unité de commande électronique (10), audit premier moyen de vanne-pilote (8) étant intégré dans ledit module (1).

9. Dispositif de freinage de stationnement selon au moins une quelconque des revendications 1 à 5, **caractérisé en ce que** ledit premier circuit de freinage de stationnement (4) set un circuit de freinage de stationnement électropneumatique et **en ce que** ledit premier moyen de vanne-pilote (8) renferme au moins une électrovanne (16), qui est commandée par une unité de commande électronique commandant, au même temps, ledit circuit de freinage de stationnement électropneumatique (26) supplémentaire, à ladite unité de commande étant disposée à distance d'un module (1), dans lequel sont intégrés ledit premier moyen de vanne-pilote (8) et ledit moyen de vanne-pilote supplémentaire (30), dans lequel au moins quelques-unes électrovannes (16, 32) renferment des aimants doubles (38, 40 et 42, 44) aptes à être commandé par des lignes de commande électrique placées en nombres redondants.

10. Dispositif de freinage de stationnement selon la revendication 8 ou 9, **caractérisé en ce que** ledit premier moyen de vanne-pilote (8) dudit premier circuit de freinage de stationnement électropneumatique (4) comprend une soupape de relais (12) qui sert à moduler ou désaérer un niveau de pression de régime pour ledit cylindre de frein à accumulateur (6) en fonction d'une pression motrice, qui est engendrée par au moins une électrovanne (16, 22) à partir du niveau de pression d'alimentation dudit premier réservoir sous pression (14).

11. Dispositif de freinage de stationnement selon la revendication 10, **caractérisé en ce que** ladite au moins une électrovanne renferme un distributeur à 3/2 orifices (16), qui établit une communication de ladite pression d'alimentation dudit premier réservoir sous pression (14) avec une entrée de commande (18) de ladite soupape de relais (12) ou établit une communication de ladite entrée de commande avec un moyen de purge de l'air (20).

12. Dispositif de freinage de stationnement selon la revendication 11, **caractérisé en ce qu'**un distributeur à 2/2 orifices (22) est interposé entre la vanne à 3/2 orifices (16) et ladite soupape de relais (12), moyennant duquel on peut engendrer une pression de commande graduable.

13. Dispositif de freinage de stationnement selon au moins une quelconque des revendications précédentes, **caractérisé en ce que** la pression régnant à la sortie de pression dudit premier moyen de vanne-pilote (8) et/ou à la sortie de pression dudit moyen de vanne-pilote supplémentaire (30) est mesurée moyennant au moins un détecteur de pression (25, 36).

14. Dispositif de freinage de stationnement selon au moins une quelconque des revendications précédentes, **caractérisé en ce qu'**un dépassement ou sous-dépassement d'au moins un seuil de pression à la sortie de pression dudit moyen de vanne-pilote supplémentaire (30) est détecté moyennant au moins un interrupteur manométrique.
